# FASCICULE DE BREVET EUROPEEN

(11) **EP 0 560 685 B1**
(45) Date de publication et mention de la délivrance du brevet: **19.08.1998**
(21) Numéro de dépôt: 93400627.1
(22) Date de dépôt: 11.03.1993
(51) Int. Cl.: F16H 7/12

(54) **Tendeur pour courroie et système de transmission comprenant un tel tendeur**
Riemenspanner und Getriebe mit einem derartigen Spanner
Belt tensioner and transmission system using such a tensioner

(30) Priorité: 12.03.1992 FR 9202943
(43) Date de publication de la demande: 15.09.1993
(73) Titulaire: HUTCHINSON, F-75008 Paris (FR)
(72) Inventeur: Bristot, Pierre, F-35710 Ballan (FR)
(74) Mandataire: Orès, Bernard

(56) Documents cités:
- EP-A- 0 289 814
- EP-A- 0 407 261
- BE-A- 512 036
- FR-A- 2 635 569
- FR-A- 2 644 541
- FR-A- 2 645 931
- US-A- 4 790 801

## Description

L'invention se rapporte principalement à un tendeur pour courroie de transmission, notamment pour courroie de transmission de puissance, par exemple striée ou trapézoïdale, et pour courroie dentée dite de distribution dans l'industrie automobile ainsi qu'à un système de transmission comportant un tel tendeur.

On sait qu'un système de transmission de puissance par courroie d'un arbre à un autre exige la présence d'un tendeur de courroie pour l'obtention d'un fonctionnement satisfaisant, et l'on a déjà proposé, par conséquent, de nombreux dispositifs de tendeurs comportant un ressort métallique, d'une part, et des moyens pour amortir les vibrations engendrées dans la courroie par les irrégularités cycliques du régime moteur, d'autre part.

Si de tels dispositifs connus donnaient satisfaction, ils sont généralement des structures complexes, donc de prix et d'encombrement importants.

Un dispositif simplifié et d'encombrement réduit est décrit dans la Demande de Brevet français N° 89 03512 publiée sous le N° FR 2 644 541. Ce dispositif comporte un galet tendeur coopérant avec la courroie, un ressort de rappel, un dispositif d'amortissement comportant une première chambre à volume variable située à l'intérieur du ressort de rappel recouvert par une gaine en caoutchouc et une seconde chambre à volume variable située dans le prolongement de ce ressort, les deux chambres communiquant par l'intermédiaire d'un clapet pour obtenir un amortissement. L'encombrement de la seconde chambre est non négligeable et, de plus, le ressort se détend lors de l'apparition d'une diminution de la tension de la courroie, ce qui augmente encore l'encombrement de ce dispositif.

De plus, les moteurs modernes imposent des contraintes de plus en plus sévères aux courroies pour lesquelles l'amortissement, obtenu à l'aide du dispositif décrit dans la Demande de Brevet précitée, est insuffisant car la pression admissible dans la première chambre est limitée par la résistance de la gaine en caoutchouc recouvrant le ressort.

Le Brevet US-A-4 790 801 décrit un tendeur hydraulique pour courroie comprenant un cylindre et un piston formant une chambre interne à volume variable et une chambre externe coaxiale avec la chambre interne. La chambre interne et la chambre externe sont reliées par un clapet à bille unidirectionnel de dimensions importantes. Lors de la remontée du piston dans le cylindre, et par conséquent de l'augmentation du volume de la chambre interne, l'huile est aspirée et passe par le clapet de la chambre externe vers le cylindre. Les dimensions importantes du clapet provoquent un amortissement faible. La descente du piston dans le cylindre assure la fermeture du clapet, un amortissement important étant obtenu par un écoulement laminaire de l'huile entre le piston et le cylindre.

Le document EP-A-0 289 814 divulgue un tendeur comportant toutes les caractéristiques du préambule de la revendication indépendante.

Malheureusement, il est extrêmement difficile de calibrer un tel écoulement qui, de plus, varie avec, d'une part, la température de fonctionnement et, d'autre part, avec l'usure du dispositif.

C'est, par conséquent, un but de la présente invention de fournir un tendeur pour courroie, notamment pour courroie de transmission de puissance, permettant d'obtenir des niveaux d'amortissement élevés, notamment lors de l'augmentation de la tension mécanique dans la courroie.

C'est aussi un but de la présente invention de fournir un tendeur pour courroie, notamment pour courroie de transmission de puissance permettant d'obtenir un retour extrêmement rapide, notamment lors de la détente de la courroie.

C'est également un but de la présente invention de fournir un tendeur pour courroie, notamment pour courroie de transmission de puissance ayant une structure simple, et de ce fait un faible coût de fabrication.

C'est aussi un but de l'invention de fournir un tel tendeur de plus faible encombrement, notamment plus court que les dispositifs connus, et qui présente ainsi l'avantage de nécessiter moins d'espace pour sa mise en oeuvre, ce qui rend son application possible dans des cas où le volume disponible est limité, par exemple, dans certains systèmes associés à des moteurs d'automobiles.

C'est également un but de la présente invention de fournir un tendeur dont le comportement dynamique varie peu avec la température.

C'est aussi un but de la présente invention de fournir un tendeur susceptible d'être adapté au taux d'amortissement désiré, notamment en fonction du moteur à équiper.

Les buts sont atteints par un tendeur comportant deux chambres remplies avec un fluide, notamment avec de l'huile et un passage calibré de faible diamètre permettant un écoulement du fluide entre les deux chambres avec amortissement important. La mise en oeuvre d'un passage calibré permet un écoulement sensiblement indépendant des conditions externes, et notamment de la température, notamment un écoulement turbulent. Avantageusement, le tendeur selon la présente invention comporte un second passage de fluide entre les deux chambres, d'une surface de passage plus importante, ce deuxième passage n'étant avantageusement accessible au fluide que pour un écoulement provoqué par la diminution de la tension mécanique de la courroie.

L'invention a principalement pour objet un tendeur pour courroie comportant deux moyens de fixation, notamment des chapes reliées mécaniquement par un ressort à boudin et deux chambres coaxiales contenant du fluide, reliées hydrauliquement par une connexion comportant un passage pour l'écoulement du fluide d'une chambre dans l'autre, engendré par des moyens de pompage lors d'une variation de la distance entre les deux moyens de fixation, une première des deux chambres contenant du fluide est radialement externe par rapport à une seconde des deux chambres contenant du fluide qui est radialement interne, la chambre interne s'étendant sur une partie de la hauteur de la chambre externe, la chambre interne est délimitée radialement par un cylindre rigide, caractérisé en ce que le passage d'écoulement du fluide a une section calibrée qui détermine l'amortissement et qui est aménagé dans un piston des moyens de pompage du fluide et dans un clapet s'ouvrant lorsque les moyens de fixation du tendeur s'éloignent mutuellement et se refermant lors du rapprochement des moyens de fixation du tendeur, et en ce que la chambre externe est délimitée radialement par, d'une part, par la paroi externe du cylindre et, d'autre part, par une gaine en matériau élastomère, notamment en caoutchouc enrobant le ressort à boudin et formant l'enveloppe externe du tendeur.

L'invention a également pour objet un tendeur, caractérisé en ce qu'il comporte, dans la connexion des deux chambres, un clapet comportant des ouvertures susceptibles d'être au moins partiellement masquées lors de l'écoulement du fluide de la chambre interne vers la chambre externe et susceptibles d'être découvertes lors de l'écoulement du fluide de la chambre externe vers la chambre interne.

L'invention a également pour objet un tendeur, caractérisé en ce que le clapet est constitué par une plaque mobile en forme d'étoile, les ouvertures masquables étant disposées à sa périphérie.

L'invention a également pour objet un tendeur, caractérisé en ce que le clapet comprend une partie plane en forme d'étoile solidarisée avec une cuvette, notamment une cuvette à fond plat et à paroi cylindrique reliée par une paroi circulaire vue en coupe transversale.

L'invention a également pour objet un tendeur, caractérisé en ce que les moyens de pompage comportent un piston séparant les deux chambres et dont le diamètre est légèrement inférieur à l'alésage du cylindre pour permettre un écoulement des fluides entre le piston et le cylindre.

L'invention a également pour objet un tendeur, caractérisé en ce que la fixation des extrémités du ressort à boudin sur les moyens de fixation du tendeur ainsi que l'étanchéité entre les extrémités de la gaine et les moyens de fixation du tendeur sont assurées par des douilles serties sur ces moyens de fixation.

L'invention a également pour objet un tendeur, caractérisé en ce que sa cohésion est assurée par le cylindre et les moyens de pompage, notamment par une tige du piston.

L'invention a également pour objet un tendeur, caractérisé en ce que le clapet est muni d'un ressort de rappel vers une position de repos dans laquelle les ouvertures masquables sont masquées.

L'invention a également pour objet un tendeur, caractérisé en ce qu'il comporte des moyens de mise en précontrainte du ressort, notamment un anneau d'arrêt du piston.

L'invention a également pour objet un tendeur, caractérisé en ce qu'il comporte une canalisation d'écoulement de fluide entre les deux chambres, ménagée dans le piston.

L'invention a également pour objet un tendeur, caractérisé en ce que la canalisation comporte un canal radial débouchant à proximité de l'extrémité supérieure du piston relié par un canal axial à une lumière calibrée disposée à la base du piston.

L'invention a également pour objet un système de transmission pour moteur comportant une courroie et au moins deux poulies, caractérisé en ce qu'il comporte un tendeur, selon l'invention, fixé par une première extrémité à un bloc moteur et accroché à son extrémité opposée à un levier monté pivotant autour d'un axe et qui porte à son autre extrémité un galet appuyant sur la courroie, le galet et la fixation du tendeur sur le bloc moteur se trouvant du même côté de la courroie.

L'invention sera mieux comprise au moyen de la description ci-après et des figures annexées données comme des exemples non limitatifs et sur lesquelles :
- la figure 1 est une vue schématique d'un système de transmission de puissance par courroie selon l'invention ;
- la figure 2 comporte trois coupes longitudinales d'un premier exemple de réalisation du tendeur selon la présente invention ;
- la figure 3 comporte deux vues en coupe d'un détail de réalisation du tendeur selon la présente invention ;
- la figure 4 est une vue de dessus d'un premier exemple de réalisation d'un clapet susceptible d'être mis en oeuvre dans le tendeur selon la présente invention ;
- la figure 5 est une vue en coupe longitudinale d'un deuxième exemple de réalisation du tendeur selon la présente invention ;
- la figure 6 est une coupe longitudinale d'un troisième exemple de réalisation du tendeur selon la présente invention ;
- la figure 7 comporte des vues d'un deuxième exemple de réalisation d'un clapet susceptible d'être mis en oeuvre dans le tendeur selon la présente invention ;
- la figure 8 comporte deux coupes longitudinales d'un troisième exemple de réalisation d'un tendeur selon la présente invention.

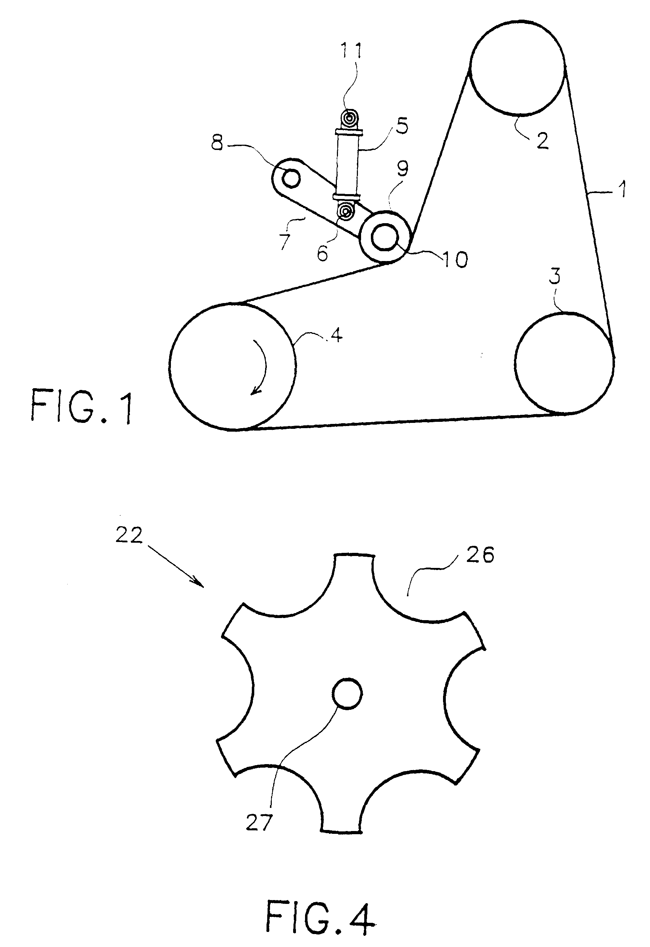

Sur les figures 1 à 8, on a utilisé les mêmes références pour désigner les mêmes éléments.

On se réfère d'abord à la figure 1 qui illustre, très schématiquement, un système de transmission de puissance dans lequel une courroie 1 coopère avec les flasques des poulies 2 et 3 solidaires en rotation d'arbres menés et avec les flasques d'une poulie 4 solidaire d'un arbre menant, par exemple le vilebrequin d'un moteur automobile, de camion, de machine agricole ou analogue. Pour assurer la tension de la courroie 1, on associe au système un tendeur 5, accroché au niveau de son oeil 6 à un levier 7, monté à pivotement à une de ses extrémités autour d'un axe 8 et qui porte à son autre extrémité un galet 9 tourillonnant autour d'un axe 10 appuyant sur la courroie 1. Le tendeur 5 dont l'oeil 11 opposé à l'oeil 6 est fixé au bloc moteur non représenté, est destiné à rattraper l'allongement de la courroie 1 afin d'éviter le glissement de celle-ci par rapport aux flasques des poulies, d'une part, et, d'autre part, à amortir les vibrations engendrées dans la courroie 1 par les irrégularités cycliques du régime moteur, en particulier au ralenti, ou lors des à coups engendrés par la mise en route et/ou l'arrêt des appareils entraînés par les arbres solidaires des poulies 2 et 3.

Avantageusement, le point de fixation du tendeur 5 sur le bloc moteur et le galet 9 se trouvent du même côté de la courroie de façon à ce qu'une diminution de la tension de la courroie 1 entraîne une augmentation de la distance séparant les yeux 6 et 11.

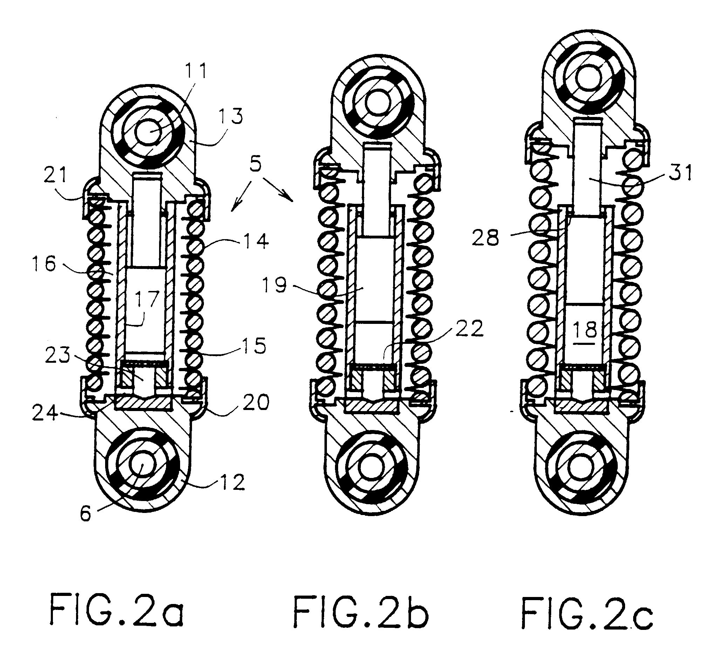

Le tendeur 5 illustré sur la figure 2 comporte une chape inférieure 12 comprenant l'oeil 6 et une chape supérieure 13 comportant l'oeil 11 entre lesquels s'étend un ressort à boudin 14 solidaire par enrobage d'une gaine en matériau élastomère 15, par exemple en caoutchouc nitrile et qui forme la paroi latérale d'une chambre externe 16 remplie de fluide, notamment une huile minérale assurant une bonne lubrification, une huile silicone dont la viscosité varie peu avec la température, ou de liquide et de gaz. A l'intérieur de la chambre 16, se trouve un cylindre 17 dont les parois délimitent une chambre interne 18 dans laquelle coulisse un piston 19 assurant le pompage du fluide entre les deux chambres et séparant verticalement les chambres 16 et 18.

Il en résulte que la chambre externe 16 sensiblement coaxiale à la chambre interne 18 est délimitée radialement à l'intérieur par la paroi externe du cylindre 17 et à l'extérieur par la gaine 15 enrobant le ressort 14. Dans l'exemple de réalisation illustrée, la chambre externe 16 s'étend sur toute la hauteur (variable) du tendeur 5, comprise entre les chapes 12 et 13, tandis que la chambre interne 18 a une hauteur inférieure à la hauteur du tendeur 5 dans sa position de travail normale illustrée sur la figure 2b. Le volume de la chambre interne 18 diminue, par suite de la descente du piston 15, lors du rapprochement des chapes 12 et 13.

Avantageusement, l'étanchéité entre la gaine 15 et les chapes 12 et 13 est assurée par des douilles 20 et 21 serties sur des joints semi toriques ménagés sur la face externe de la gaine 15.

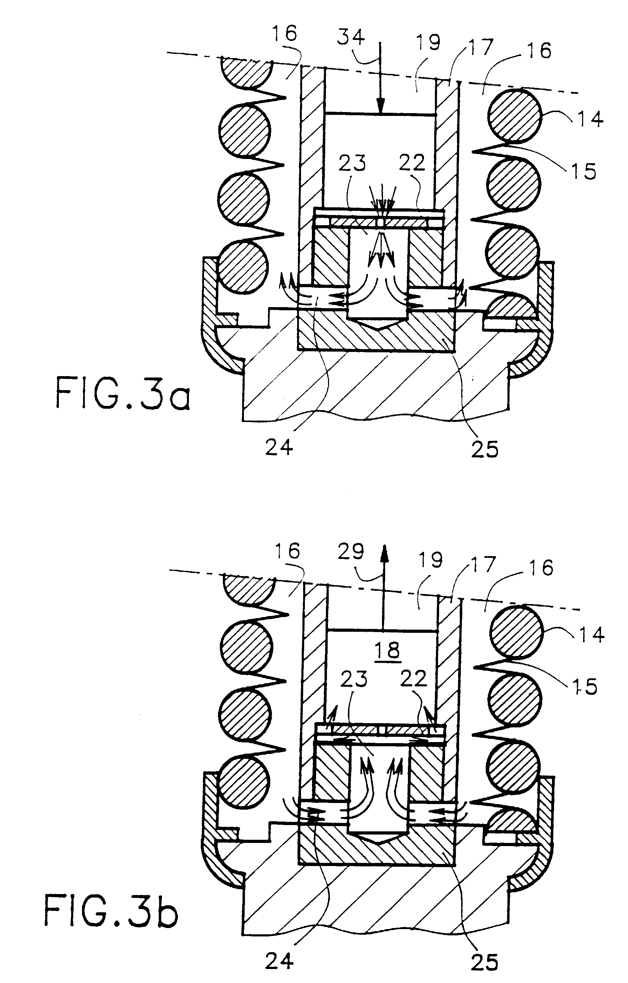

La chambre interne 18 communique dans sa partie inférieure avec la chambre externe 16 par l'intermédiaire d'un clapet 22, d'une cheminée 23 et de lumières radiales 24 ménagées dans un siège 25 du clapet 22, que l'on peut mieux voir sur la figure 3.

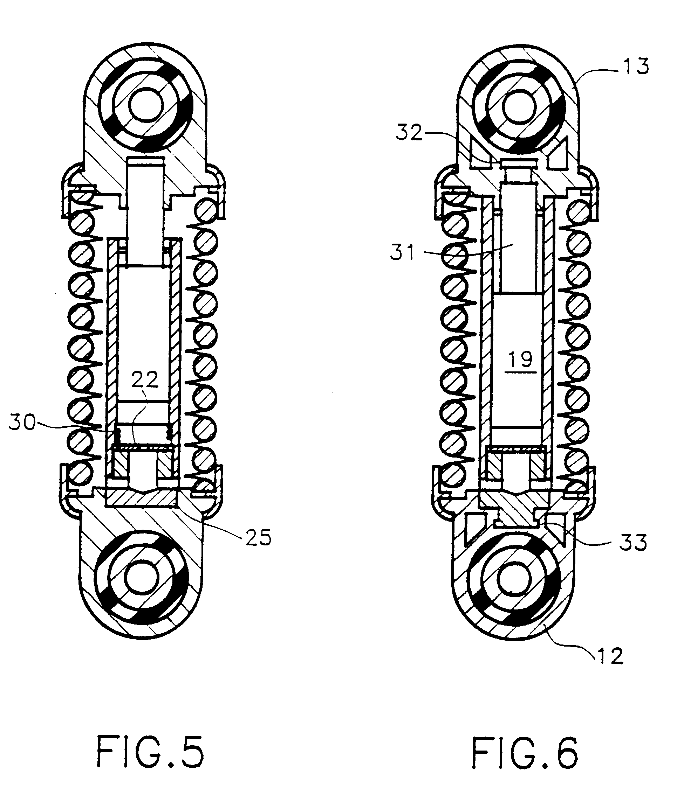

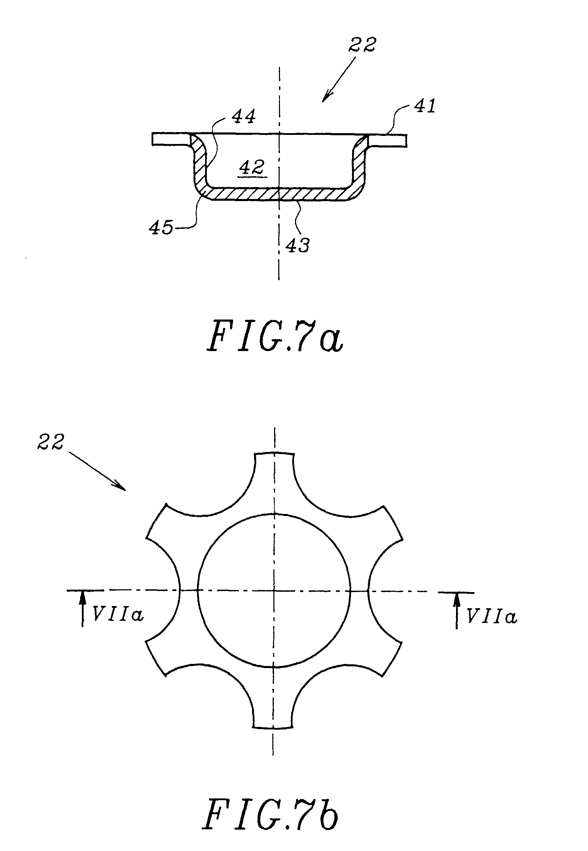

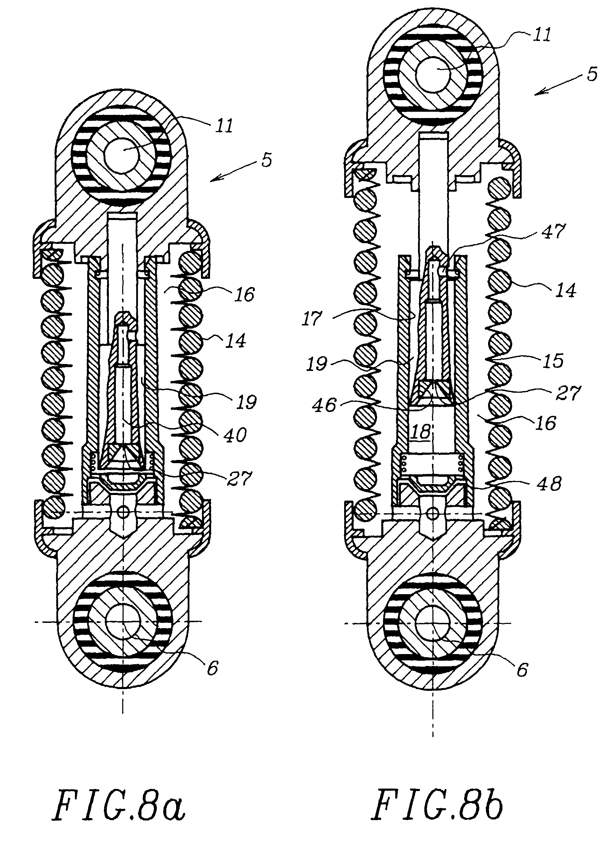

Comme on peut le voir sur la figure 4, le clapet 22 comporte les lumières masquables 26 et, avantageusement, au moins une lumière calibrée non masquable 27. Dans la variante de réalisation de la figure 8 du tendeur selon la présente invention, la lumière calibrée non masquable 27 est disposée à l'entrée d'une canalisation reliant la chambre interne 18 à la chambre externe 16, ménagée dans le piston 19. Dans l'exemple illustré sur la figure 4, le clapet 22 est une plaque plane en forme d'étoile munie en son centre d'un trou calibré 27. Sur la figure 7, l'on peur voir une variante de réalisation avantageuse du clapet selon la présente invention comportant une partie plane supérieure en forme d'étoile reliée à une cuvette 42 comportant un fond plat 43 disposé orthogonalement à une paroi cylindrique 44. En coupe, le passage 45 entre la paroi 44 et la paroi 43 forme un arc de cercle. Le clapet de la figure 7 est adapté pour coopérer avec un siège conique. Dans un tel cas, un faible soulèvement du clapet libère des sections de passage importantes permettant à l'huile de remonter plus librement, et assurant ainsi une tension plus rapide de la courroie.

Avantageusement, le ressort 14 est précontraint en compression. Par exemple, le cylindre 17 est muni dans sa partie supérieure d'un anneau d'arrêt 28 limitant lors de sa remontée la course du piston 19, comme illustré sur la figure 2c. La tension de la courroie 1 transmise par le galet 9 et le bras de levier 7 comprime le ressort 14 et assure la descente du piston 19 tel qu'illustré sur la figure 2b en position de travail normale. La position de compression maximale est illustrée sur la figure 2a, la face inférieure du piston 19 se trouvant à proximité immédiate du clapet 22.

Avantageusement, l'amortissement lors de l'élévation de la tension dans la courroie 1 et par suite du rapprochement des yeux 6 et 11, est très important, tandis que l'amortissement est faible ou négligeable lors de la diminution de la tension de la courroie 1 avec l'éloignement des yeux 6 et 11, ce qui permet de rattraper au plus vite la tension de la courroie. Ce type de fonctionnement est illustré plus particulièrement sur la figure 3. Le clapet 22 a, avantageusement, un jeu vertical. Lors de la compression du ressort, symbolisée sur la figure 3a, par la flèche 34, le clapet 22 est plaqué sur son siège 25, ce qui masque les ouvertures masquables 26 à sa périphérie et laisse découvert une ou plusieurs ouvertures calibrées 27. L'écoulement du fluide, à travers l'ouverture ou les ouvertures calibrées 27, illustré par des flèches sur la figure 3a, provoque l'amortissement désiré. Le fluide s'écoule de la chambre interne 18 dans la chambre externe 16.

Dans une variante de réalisation, l'amortissement est provoqué par l'écoulement du fluide entre le cylindre 17 et le piston 19 par un jeu calibré.

De même, il est possible de ménager simultanément un jeu calibré entre le cylindre 17, le piston 19 et une ouverture calibrée 27 non masquable. L'écoulement entre le cylindre 17 et le piston 19 ainsi qu'à travers l'ouverture 27 doit conduire à l'amortissement désiré. L'écoulement d'huile entre le cylindre 17 et le piston 19 assure la lubrification des parois interne du cylindre 17 et externe du piston particulièrement efficace dans le cas d'utilisation d'huiles minérales, ce qui améliore le guidage et diminue l'usure.

Il est à noter que seule la chambre interne 18, munie d'un cylindre rigide 17, par exemple en acier, supporte la haute pression nécessaire à un amortissement important. La pression dans la chambre 16 est inférieure, et en tout cas suffisamment faible pour pouvoir être supportée par la gaine 15.

Lors de la diminution de la tension de la courroie, le piston 19 remonte selon la flèche 29, comme illustré sur la figure 3b et entraîne avec lui le clapet 22, ce qui découvre les ouvertures masquables 26 qui présentent une section d'écoulement suffisante pour permettre un écoulement rapide du fluide avec un amortissement faible ou négligeable permettant un rattrapage rapide de la tension dans la courroie 1.

Il est bien entendu que les ouvertures partiellement masquables peuvent permettre de faire varier l'amortissement entre la compression (figure 3a) et la dépression (figure 3b) sans sortir du cadre de la présente invention.

De même, dans une variante de réalisation illustrée sur la figure 5, un ressort 30 plaque le clapet 22 sur le siège 25 en masquant les ouvertures masquables 26. La remontée du piston 19 entraîne le clapet 22 vers le haut de la figure, ce qui permet un équilibrage rapide des pressions entre la chambre externe 16 et la chambre interne 18.

Le ressort 30 permet de diminuer le temps nécessaire à l'obturation des ouvertures masquables 26 car le clapet se trouve au repos sur le siège 25 ou plus près de ce siège.

Avantageusement, la cohésion du tendeur 5 selon la présente invention est assurée par ses organes hydrauliques. Par exemple, une tige 31 du piston 19 est solidarisée avec la chape 13 alors que le siège 25 du clapet 22 solidarisé au cylindre 17 est ancré dans la chape 12. Un exemple avantageux d'une telle fixation est illustré sur la figure 6, sur laquelle l'extrémité supérieure de la tige 31 du piston 19 est munie d'un épaulement 32 tandis que la partie inférieure du siège 25 est munie d'un épaulement 33.

Pour assurer un bon fonctionnement de l'exemple de réalisation du tendeur selon la présente invention de la figure 2, il peut s'avérer utile de laisser de l'air dans la chambre externe 16 et de prendre des précautions pour éviter l'introduction de l'air, lors du montage, dans la chambre interne 18.

De même, l'on peut remplir la chambre externe 16 avec un gaz sous une pression susceptible d'être supportée par la gaine 15. On peut également remplir la chambre externe 16 avec tout fluide compressible compatible avec l'huile remplissant la chambre interne 18.

Sur la figure 8, l'on peut voir l'exemple préféré de réalisation du tendeur selon la présente invention. Le tendeur comporte avantageusement un clapet 22 de la figure 7 ainsi qu'un piston 19 comprenant une canalisation 40 permettant l'écoulement de l'huile de la chambre interne 18 vers la chambre externe 16. Dans l'exemple préféré de réalisation, la canalisation comporte une lumière calibrée 27 située au fond d'un élément conique 46 disposé à la partie inférieure du piston 19. La canalisation 40 comporte principalement un canal situé le long de l'axe du piston 19 relié par un canal transversal 47 à la chambre externe 16. La canalisation 40 permet l'écoulement du fluide de la chambre 18 vers la chambre 16 avec passage de la configuration détendue de la figure 8d à la condition comprimée illustrée sur la figure 8a.

L'exemple de réalisation illustré sur la figure 8 présente de nombreux avantages. La mise en oeuvre du clapet 22 de la figure 7 associée à un siège conique 48 permet un écoulement extrêmement rapide du fluide de la chambre externe vers la chambre interne lors des détentes de la courroie 1. Le remplissage de la chambre interne 18 ne risque pas d'être perturbé par des phénomènes de cavitation de l'huile à la sortie de l'orifice calibré 27. L'on évite ainsi le remplissage de la chambre interne 18 par une phase gazeuse perturbant l'amortissement. En effet, l'huile aspirée est saine, car éloignée de la zone pouvant être perturbée à la sortie de la conduite 47. De plus, le tendeur de la figure 8 est auto-amorçant puisqu'un gaz éventuellement présent dans la chambre interne 18 s'évacue naturellement vers le haut par l'intermédiaire de la canalisation 40. Ainsi, d'une part, l'on a besoin de prendre moins de précautions lors du montage du tendeur de la figure 8 qu'avec un tendeur de la figure 2, et, d'autre part, l'apparition d'un gaz dans la chambre interne 18, en cours de fonctionnement du tendeur, ne perturbe pas durablement son fonctionnement.

Ainsi, le tendeur de la figure 8 est susceptible de fonctionner dans des conditions plus sévères de sollicitation avec des efforts d'amortissement supérieurs, une amplitude plus importante des déplacements et des fréquences d'excitation plus élevées. Il sollicite moins la courroie 1 et sa durée de vie est améliorée par rapport à la variante de la figure 2.

Le tendeur selon la présente invention peut être adapté au taux d'amortissement désiré par le choix de la section de passage de l'ouverture calibrée 27. Une section importante réduit le taux d'amortissement alors qu'une section faible conduit à un amortissement élevé.

Il est bien entendu que des tendeurs munis d'ouvertures calibrées 27 de diamètre important et/ou de jeux importants entre le cylindre 17 et le piston 19 dont résulte un amortissement faible ou même négligeable, ne sortent pas du cadre de la présente invention.

Il est à remarquer que le tendeur 5 a un sens de montage imposé, le clapet 22 étant situé dans sa partie inférieure. Dans le cas contraire, l'air ou le gaz sous pression serait aspiré en premier lors de l'ouverture du clapet ne permettant pas le remplissage de la chambre interne 18. Il est, toutefois, bien entendu, qu'un tendeur n'ayant pas de sens de montage imposé ne sort pas du cadre de la présente invention.

## Revendications

1. Tendeur pour courroie (1) comportant deux moyens de fixation, notamment des chapes (12,13) reliées mécaniquement par un ressort à boudin (14) et deux chambres (16,18) coaxiales contenant du fluide, reliées hydrauliquement par une connexion (23,24) comportant un passage pour l'écoulement du fluide d'une chambre dans l'autre, engendré par des moyens de pompage (19) lors d'une variation de la distance entre les deux moyens de fixation, une première (16) des deux chambres (16,18) contenant du fluide est radialement externe par rapport à une seconde (18) des deux chambres (16,18) contenant du fluide qui est radialement interne, la chambre interne (18) s'étendant sur une partie de la hauteur de la chambre externe (16), la chambre interne (18) est délimitée radialement par un cylindre rigide (17), caractérisé en ce que le passage d'écoulement du fluide a une section calibrée (26,27) qui détermine l'amortissement et qui est aménagé dans un piston (19) des moyens de pompage du fluide et dans un clapet s'ouvrant lorsque les moyens (12,13) de fixation du tendeur s'éloignent (29) mutuellement et se refermant lors du rapprochement des moyens de fixation du tendeur, et en ce que la chambre externe (16) est délimitée radialement par, d'une part, par la paroi externe du cylindre (17) et, d'autre part, par une gaine (15) en matériau élastomère, notamment en caoutchouc enrobant le ressort à boudin (14) et formant l'enveloppe externe du tendeur.

2. Tendeur selon la revendication 1, caractérisé en ce qu'il comporte, dans la connexion des deux chambres (16,18), un clapet (22) comportant des ouvertures (26) susceptibles d'être au moins partiellement masquées lors de l'écoulement du fluide de la chambre interne (18) vers la chambre externe (16) et susceptibles d'être découvertes lors de l'écoulement du fluide de la chambre externe (16) vers la chambre interne (18).

3. Tendeur selon la revendication 2, caractérisé en ce que le clapet (22) est constitué par une plaque mobile en forme d'étoile, les ouvertures masquables (26) étant disposées à sa périphérie.

4. Tendeur selon la revendication 1 ou 2, caractérisé en ce que le clapet (22) comprend une partie plane en forme d'étoile (41) solidarisée avec une cuvette (42), notamment une cuvette à fond plat (43) et à paroi cylindrique (44) reliée par une paroi (45) circulaire vue en coupe transversale.

5. Tendeur selon l'une quelconque des revendications précédentes, caractérisé en ce que les moyens de pompage comportent un piston (19) séparant les deux chambres (16,18) et dont le diamètre est légèrement inférieur à l'alésage du cylindre (17) pour permettre un écoulement des fluides entre le piston (19) et le cylindre (17).

6. Tendeur selon la revendication 1, 2, 3, 4 ou 5, caractérisé en ce que la fixation des extrémités du ressort à boudin (14) sur les moyens de fixation (12,13) du tendeur (5) ainsi que l'étanchéité entre les extrémités de la gaine (15) et les moyens de fixation (12,13) du tendeur (5) sont assurées par des douilles (20,21) serties sur ces moyens de fixation (12,13).

7. Tendeur selon l'une quelconque des revendications 1 à 6, caractérisé en ce que le cylindre rigide (17) séparant radialement la chambre interne de la chambre externe et les moyens de pompage, notamment une tige (31) du piston (19), assurent la cohésion du tendeur.

8. Tendeur selon l'une quelconque des revendications précédentes, caractérisé en ce que le clapet (22) est muni d'un ressort de rappel (30) vers une position de repos dans laquelle les ouvertures masquables (26) sont masquées.

9. Tendeur selon l'une quelconque des revendications précédentes, caractérisé en ce qu'il comporte des moyens de mise en précontrainte du ressort (14), notamment un anneau d'arrêt (28) du piston (19).

10. Tendeur selon l'une quelconque des revendications précédentes, caractérisé en ce qu'il comporte une canalisation (40) d'écoulement de fluide entre les deux chambres (16,18), ménagée dans le piston (19).

11. Tendeur selon la revendication 10, caractérisé en ce que la canalisation (40) comporte un canal radial (47) débouchant à proximité de l'extrémité supérieure du piston (19) relié par un canal axial à une lumière calibrée (27) disposée à la base du piston (19).

12. Système de transmission pour moteur comportant une courroie (1) et au moins deux poulies (2,3,4), caractérisé en ce qu'il comporte un tendeur (5), selon l'une quelconque des revendications précédentes, fixé par une première extrémité à un bloc moteur et accroché à son extrémité opposée à un levier (7) monté pivotant autour d'un axe (8) et qui porte à son autre extrémité un galet (9) appuyant sur la courroie (1), le galet (9) et la fixation du tendeur (5) sur le bloc moteur se trouvant du même côté de la courroie (1).

## Patentansprüche

1. Spanner für einen Riemen bzw. ein Band (1), der zwei Befestigungsmittel, insbesondere Kappen (12, 13), hat, die mechanisch durch eine Schraubenfeder (14) und zwei Strömungsmittel enthaltende koaxiale Kammern (16, 18) verbunden sind, welche hydraulisch durch eine Verbindung (23, 24) verbunden sind, die einen Durchlaß für die Strömung von Strömungsmittel von der einen Kammer in die andere, erzeugt durch Pumpmittel (19) während einer Änderung des Abstands zwischen den beiden Befestigungsmitteln, enthält, wobei eine erste (16) der beiden Strömungsmittel enthaltenden Kammern (16, 18) radial außen mit Bezug auf eine zweite (18) der beiden Strömungsmittel enthaltenden Kammern (16, 18) ist, die radial innen ist, wobei sich die innere Kammer (18) über einen Teil der Höhe der äußeren Kammer (16) erstreckt, wobei die innere Kammer (18) radial durch einen steifen Zylinder (17) begrenzt ist, dadurch **gekennzeichnet** , daß der Durchlaß für die Strömung von Strömungsmittel einen kalibrierten Querschnitt (26, 27) hat, welcher die Dämpfung bestimmt und welcher in einem Kolben (19) von Pumpmitteln für das Strömungsmittel und in einem Ventil angeordnet ist, das sich öffnet, wenn sich die Befestigungsmittel (12, 13) des Spanners gegenseitig entfernen (29) und sich während der Annäherung der Befestigungsmittel des Spanners wieder schließt, und daß die äußere Kammer (16) radial einerseits durch die äußere Wand des Zylinders (17) und andererseits durch eine Hülle (15) aus Elastomermaterial, insbesondere aus Kautschuk, welche die Schraubenfeder (14) ummantelt und die äußere Hülle des Spanners bildet, begrenzt ist.

2. Spanner gemäß dem Anspruch 1, dadurch **gekennzeichnet** , daß er in der Verbindung der beiden Kammern (16, 18) ein Ventil bzw. Klappenventil (22) enthält, das Öffnungen (26) hat, die fähig sind, während der Strömung von Strömungsmittel von der inneren Kammer (18) nach der äußeren Kammer (16) wenigstens teilweise abgedeckt zu werden, und die fähig sind, während der Strömung von Strömungsmittel von der äußeren Kammer (16) nach der inneren Kammer (18) aufgedeckt zu werden.

3. Spanner gemäß dem Anspruch 2, dadurch **gekennzeichnet** , daß das Ventil bzw. Klappenventil (22) von einer beweglichen, sternförmigen Platte gebildet ist, wobei die abdeckbaren Öffnungen (26) an ihrem Umfang angeordnet sind.

4. Spanner gemäß dem Anspruch 1 oder 2, dadurch **gekennzeichnet** , daß das Ventil bzw. Klappenventil (22) einen ebenen, sternförmigen Teil (41) aufweist, der mit einem Napf bzw. einer Schale (43) verbunden ist, insbesondere einem Napf bzw. einer Schale mit flachem Boden (43) und zylindrischer Wand (44), die durch eine im Querschnitt kreisförmige Wand (45) verbunden sind.

5. Spanner gemäß irgendeinem der vorhergehenden Ansprüche, dadurch **gekennzeichnet** , daß die Pumpmittel einen Kolben (19) enthalten, der die beiden Kammern (16, 18) absondert bzw. trennt und dessen Durchmesser ein wenig kleiner als die Bohrung des Zylinders (17) ist, um eine Strömung von Strömungsmitteln zwischen dem Kolben (19) und dem Zylinder (17) zu gestatten.

6. Spanner gemäß dem Anspruch 1, 2, 3, 4 oder 5, dadurch **gekennzeichnet** , daß die Befestigung der Enden der Schraubenfeder (14) auf den Befestigungsmitteln (12, 13) des Spanners (5) sowie die Dichtheit zwischen den Enden der Hülle (15) und den Befestigungsmitteln (12, 13) des Spanners (5) durch Hülsen (20, 21) sichergestellt ist, die über diese Befestigungsmittel (12, 13) gefalzt bzw. gebördelt bzw. eingesetzt sind.

7. Spanner gemäß irgendeinem der Ansprüche 1 bis 6, dadurch **gekennzeichnet** , daß der starre bzw. steife Zylinder (17), der die innere Kammer radial von der äußeren Kammer trennt, und die Pumpmittel, insbesondere eine Stange (31) des Kolbens (19), den Zusammenhalt des Spanners sicherstellen.

8. Spanner gemäß irgendeinem der vorhergehenden Ansprüche, dadurch **gekennzeichnet** , daß das Ventil bzw. Klappenventil (22) mit einer Feder (30) für das Rückstellen nach einer Ruhelage, in welcher die abdeckbaren Öffnungen (26) abgedeckt sind, versehen ist.

9. Spanner gemäß irgendeinem der vorhergehenden Ansprüche, dadurch **gekennzeichnet** , daß er Mittel, um eine Vorspannung auf die Feder (14) aufzubringen, hat, insbesondere einen Anschlagring (28) für den Kolben (19).

10. Spanner gemäß irgeneinem der vorhergehenden Ansprüche, dadurch **gekennzeichnet** , daß er eine Leitung bzw. ein Leitungssystem (40) für die Strömung von Strömungsmittel zwischen den beiden Kammern (16, 18) hat, die bzw. das in dem Kolben (19) angeordnet bzw. ausgespart ist.

11. Spanner gemäß dem Anspruch 10, dadurch **gekennzeichnet** , daß die Leitung bzw. das Leitungssystem (40) einen in der Nähe des oberen Endes des Kolbens (19) mündenden radialen Kanal (47) hat, der durch einen axialen Kanal mit einer kalibrierten Öffnung (27) verbunden ist, die an der Basis des Kolbens (19) angeordnet ist.

12. Transmissionssystem für einen Motor, der einen Riemen (1) und wenigstens zwei Riemenscheiben (2, 3, 4) hat, dadurch **gekennzeichnet** , daß es einen Spanner (5) gemäß irgendeinem der vorhergehenden Ansprüche hat, der durch ein erstes Ende an einem Motorblock befestigt und mit seinem entgegengesetzten Ende an einen Hebel (7) angekoppelt ist, der um eine Achse (8) schwenkbar angebracht ist und der an seinem anderen Ende eine Rolle bzw. Walze (9) aufweist, die gegen den Riemen (1) anliegt, wobei sich die Rolle bzw. Walze (9) und die Befestigung des Spanners (5) auf dem Motorblock auf der gleichen Seite des Riemens (1) befinden.

## Claims

1. A tensioning device for a belt (1) comprising two fixing means, namely eye joint links (12, 13) connected mechanically by a coil spring (14) and two coaxial chambers (16, 18) containing fluid and connected hydraulically by a connection (23, 24) comprising a passage for the flow of fluid from one chamber into the other by the action of pumping means (19) when there is a variation in the distance between the two fixing means, a first (16) of the two chambers (16, 18) containing fluid being radially outside a second (18) of the two chambers (16, 18) containing fluid and which is radially internal, the inner chamber (18) extending over a part of the height of the outer chamber (16), the inner chamber (18) being radially bounded by a rigid cylinder (17), characterised in that the passage for fluid flow has a calibrated cross-section (26, 27) which determines the damping action and which is provided in a piton (19) of the fluid pumping means and in a valve which opens when the means (12, 13) for fixing the tensioning device move apart from each other (29) and closing when the tensioning device fixing means move toward each other and in that the outer chamber (16) is radially bounded on the one hand by the outer wall of the cylinder (17) and on the other by a sheath (15) of elastomeric material, particularly rubber, enclosing the coil spring (14) and forming the outer jacket of the tensioning device.

2. A tensioning device according to claim 1, characterised in that it comprises, in the connection between the two chambers (16, 18), a flap valve (22) comprising apertures (26) capable of being at least partially masked upon the flow of fluid from the inner chamber (18) towards the outer chamber (16) and capable of being exposed upon flow of fluid from the outer chamber (16) towards the inner chamber (18).

3. A tensioning device according to claim 2, characterised in that the flap valve (22) is constituted by a star-shaped movable plate, the occludable apertures (26) being disposed on its periphery.

4. A tensioning device according to claim 1 or 2, characterised in that the flap valve (22) comprises a star-shaped flat part (41) fixed to a cup (42) particularly a cup with a flat bottom (43) and a cylindrical wall (44) connected by a wall (45) which is circular when viewed in cross-section.

5. A tensioning device according to any one of the preceding claims, characterised in that the pumping means comprise a piston (19) separating the two chambers (16,18) and the diameter of which is slightly smaller than the bore of the cylinder (17) to allow fluids to flow between the piston (19) and the cylinder (17).

6. A tensioning device according to claim 1, 2, 3, 4 or 5, characterised in that the fixing of the ends of the coil spring 14) on the fixing means (12, 13) of the tensioning device (5) and the sealing-tightness between the ends of the sheath (15) and the fixing means (12, 13) of the tensioning device (5) are achieved by sockets (20, 21) shrunk onto the fixing means (12, 13).

7. A tensioning device according to any one of claims 1 to 6, characterised in that the rigid cylinder (17) radially separating the inner chamber from the outer chamber and the pumping means, particularly a rod (31) of the piston (19), ensure cohesion of the tensioning device.

8. A tensioning device according to any one of the preceding claims, characterised in that the flap valve (22) is provided with a return spring (30) to restore a position of rest in which the occludable apertures (26) are masked.

9. A tensioning device according to any one of the preceding claims, characterised in that it comprises means of pre-stressing the spring (14), particularly a stop ring (28) on the piston (19).

10. A tensioning device according to any one of the preceding claims, characterised in that it comprises a pipe (40) for the flow of fluid between the two chambers (16, 18) disposed in the piston (19).

11. A tensioning device according to claim 10, characterised in that the pipe (40) comprises a radial channel (47) opening out close to the top end of the piston (19) connected by an axial channel to a calibrated port (17) disposed at the base of the piston (19).

12. A transmission system for an engine, comprising a belt (1) and at least two pulleys (2, 3, 4), characterised in that it comprises a tensioning device (5) according to any one of the preceding claims, fixed by a first end to an engine block and hooked at its other end on a lever (7) mounted to pivot about an axis (8) and which carries at its other end a roller (9) resting on the belt (1), the roller (9) and the fixing of the tensioning device (5) on the engine block being disposed on the same side of the belt (1).
